# FASCICULE DE BREVET EUROPEEN

(11) **EP 3 068 667 B1**
(45) Date de publication et mention de la délivrance du brevet: **11.10.2017**
(21) Numéro de dépôt: 14806016.3
(22) Date de dépôt: 05.11.2014
(51) Int. Cl.: B60T 8/172, B60T 13/52, B60T 17/22, F02N 11/08

(54) **PROCÉDÉ D'ESTIMATION DE LA PRESSION DANS UN RÉSERVOIR À DÉPRESSION D'UN SERVOFREIN**
VERFAHREN ZUR SCHÄTZUNG DES DRUCKS IN EINER UNTERDRUCKKAMMER EINER SERVOBREMSE
METHOD FOR ESTIMATING THE PRESSURE IN A VACUUM RESERVOIR OF A SERVO BRAKE

(30) Priorité: 13.11.2013 FR 1361063
(43) Date de publication de la demande: 21.09.2016
(73) Titulaire: Renault S.A.S., 92100 Boulogne-Billancourt (FR)
(72) Inventeur: AMARA, Sofiane, F-75013 Paris (FR); AZZI, Hamid, F-78310 Maurepas (FR)
(86) Numéro de dépôt international: PCT/FR2014/052816
(87) Numéro de publication internationale: WO 2015/071574

(56) Documents cités:
- US-A1- 2010 332 097
- US-A1- 2011 256 980

## Description

L'invention concerne un procédé d'estimation de la pression dans un réservoir à dépression pour un servofrein à dépression de véhicule automobile.

L'invention concerne plus particulièrement Procédé d'estimation de la pression dans un réservoir à dépression d'un servofrein à dépression de véhicule automobile, le véhicule comportant :
- au moins un dispositif de freinage commandé par la pression d'un fluide de freinage ;
- un maître-cylindre qui commande la pression du fluide de freinage et qui est actionné par un organe d'actionnement mobile entre une position de repos et une position extrême d'actionnement ;
- un servofrein qui est interposé entre l'organe d'actionnement et le maître-cylindre pour amplifier l'effort de l'organe d'actionnement au moyen d'une dépression fournie par un réservoir maintenu en dépression, par des moyens de dépression, à une pression d'assistance ;
- un moyen de détection du déplacement de l'organe d'actionnement au-delà d'une position intermédiaire de garde ;
- un capteur de pression qui est agencé de manière à mesurer la pression de freinage du fluide de freinage ;
le procédé comportant :
- une première étape de détermination de la pression de freinage qui est répétée cycliquement ;
- une deuxième étape de calcul de l'amplitude d'une diminution de pression au cours de laquelle le maximum puis le minimum atteints successivement par la pression de freinage sont mémorisés, et au cours de laquelle l'amplitude de la diminution de pression de freinage est calculée en effectuant la différence entre le maximum et le minimum ;
- une troisième étape qui est déclenchée à l'issue de la deuxième étape et au cours de laquelle l'augmentation de la pression dans le réservoir à dépression est estimée en fonction de l'amplitude calculée à la deuxième étape, une pression d'assistance actualisée étant calculée en additionnant ladite augmentation avec une pression initiale d'assistance.

Les véhicules automobiles sont généralement équipés de dispositifs de freinage, tels que des freins à disque, qui sont commandés par la pression d'un fluide de freinage. La pression du fluide de freinage est plus particulièrement commandée par un maître-cylindre qui est actionné par le conducteur via un organe d'actionnement communément formé par une pédale de freinage.

La pression requise pour faire fonctionner efficacement les dispositifs de freinage est très élevée. Pour assister le conducteur dans son effort de freinage, il est connu d'équiper le véhicule d'un servofrein à dépression, aussi appelé "brake booster" ou "master vac". A cet effet, le servofrein utilise une dépression produite par des moyens de dépression. La dépression est par exemple produite par une pompe à vide entraînée par le moteur, ou encore elle est produite directement par le fonctionnement du moteur, au niveau du circuit d'admission d'air.

Par ailleurs, afin de réduire la pollution et d'économiser du carburant, il est connu d'équiper les véhicules à moteur à combustion de différents systèmes.

Par exemple, un système d'arrêt et de démarrage automatique, plus connu sous l'appellation anglosaxonne "start and stop" permet d'arrêter automatiquement le moteur à combustion lorsque le véhicule est arrêté pour une courte durée, par exemple à un feu rouge ou dans des encombrements. Le moteur est redémarré automatiquement lorsque le conducteur effectue une manoeuvre pour faire repartir le véhicule, par exemple en appuyant sur la pédale d'accélération ou en engageant une vitesse.

On peut aussi citer les stratégies dite de "coasting" consistant à arrêter le moteur lors de phases de décélération du véhicule.

Certains véhicules sont aussi équipés de pompes à vide électriques qui sont commandées en fonction de la pression à l'intérieur du réservoir.

Néanmoins, de tels dispositifs présentent l'inconvénient d'interrompre la production de dépression alors même que le véhicule est toujours dans une situation de circulation. Ainsi, si le conducteur pompe avec la pédale durant un arrêt automatique du moteur, la dépression dans le servofrein n'est plus suffisante pour permettre d'actionner efficacement le maître-cylindre.

Pour résoudre ce problème, il est connu d'interposer un réservoir à dépression entre la source de dépression et le servofrein. Ce réservoir permet ainsi au conducteur de bénéficier d'une réserve de dépression suffisante pour actionner plusieurs fois le maître-cylindre.

Néanmoins cette solution ne permet pas de faire face à toutes les situations.

On a donc proposé de redémarrer automatiquement le moteur à combustion lorsque la pression dans le réservoir à dépression devient supérieure à un seuil maximal déterminé. Pour ce faire, il est connu mesurer directement la pression dans le réservoir à dépression au moyen d'un capteur de pression.

Toutefois, si cette solution donne satisfaction sur un plan technique, elle n'est pas avantageuse économiquement car elle nécessite l'installation d'un capteur de pression dédié au réservoir à dépression.

Le document US2010/332097A1 montre un procédé d'après le préambule de la revendication 1.

L'invention propose de résoudre ce problème en estimant la pression présente dans le réservoir à dépression au moyen de capteurs déjà existant dans le véhicule. L'invention propose ainsi un procédé du type décrit précédemment, caractérisé en ce qu'il comporte une quatrième étape de calcul du retour vers une pression minimale d'assistance dans le réservoir, qui est déclenchée à l'issue de la troisième étape et au cours de laquelle la diminution de pression créée dans le réservoir par les moyens de dépression est calculée.

Selon d'autres caractéristiques de l'invention :
- la quatrième étape dure jusqu'à ce qu'une nouvelle amplitude de diminution de pression de freinage ait été calculée à la deuxième étape, ou jusqu'à ce que la pression minimale d'assistance soit atteinte, la pression d'assistance obtenue à l'issue de cette quatrième étape étant utilisée lors de l'itération suivante de la troisième étape comme pression initiale d'assistance ;
- le retour vers la pression minimale d'assistance est simulé par une fonction exponentielle décroissante présentant une constante de temps déterminée ;
- les moyens de dépression sont formés par une pompe mécanique qui est entraînée par un moteur thermique, la constante de temps étant fixée et invariable ;
- les moyens de dépression sont formés par une dépression dans une conduite d'admission d'air d'un moteur thermique, la constante de temps étant variable en fonction de paramètres de fonctionnement du moteur, notamment son régime ;
- les moyens de dépression sont formés par une pompe électrique, la constante de temps étant variable en fonction de l'intensité du courant de commande de la pompe électrique ;
- au cours de la première étape, la pression de freinage calculée est égale à :
   -- une valeur de repos tant qu'aucun déplacement de l'organe d'actionnement n'est détecté ; ou à,
   -- la plus grande valeur entre la mesure de la pression par le capteur et une pression minimale déterminée lorsqu'un déplacement de l'organe d'actionnement est détecté ;
- au cours de la troisième étape, l'augmentation de pression dans le réservoir est estimée en fonction de l'amplitude de la diminution de pression à partir d'une courbe de correspondance prédéterminée ;
- la courbe prédéterminée présente la forme d'un escalier de manière à faire correspondre une augmentation déterminée de la pression avec un intervalle déterminé de valeurs d'amplitude de diminution de pression de freinage ;
- lors de la deuxième étape, une première valeur de pression est considérée comme un maximum de pression lorsqu'une deuxième valeur de pression calculée au cycle suivant de la première étape est strictement inférieure à la première valeur ;
- lors de la deuxième étape, une première valeur de pression est considérée comme un minimum lorsque :
   -- un maximum a été atteint précédemment ;
   -- et une deuxième valeur de pression calculée au cycle suivant de la première étape est supérieure ou égale à la première valeur de pression ;
- la deuxième étape est réitérée lorsqu'un minimum a été atteint.

D'autres caractéristiques et avantages de l'invention apparaitront au cours de la lecture de la description détaillée qui va suivre pour la compréhension de laquelle on se reportera aux dessins annexés parmi lesquels :
- la figure 1 est un schéma qui représente un véhicule automobile à moteur à combustion équipé d'un dispositif de freinage comportant un servofrein à dépression ;
- la figure 2 est une vue en section qui représente le servofrein à dépression de la figure 1 dans un état de repos ;
- la figure 3 est une vue similaire à celle de la figure 2 dans laquelle le servofrein est dans un état actionné ;
- la figure 4 est un schéma-bloc qui représente un procédé d'estimation de la pression dans un réservoir à vide du servofrein réalisé selon les enseignements de l'invention ;
- la figure 5 est un schéma-bloc qui représente plus en détail la deuxième étape du procédé de la figure 4 ;
- la figure 6 est un diagramme qui représente la variation de pression de fluide de freinage en fonction du temps ;
- la figure 7 est un diagramme qui représente l'augmentation estimée de pression d'assistance dans le réservoir en fonction de l'amplitude de la diminution de pression de freinage ;
- la figure 8 est une courbe qui représente l'évolution dans le temps de la pression d'assistance estimée par le procédé selon l'invention pendant une succession de freinage du véhicule ;
- la figure 9 est une courbe qui représente le retour de la pression d'assistance vers sa valeur minimale lorsque la constante de temps des moyens de dépression varie.

Dans la suite de la description, des éléments présentant une structure identique ou des fonctions analogues seront désignés par un même numéro de référence.

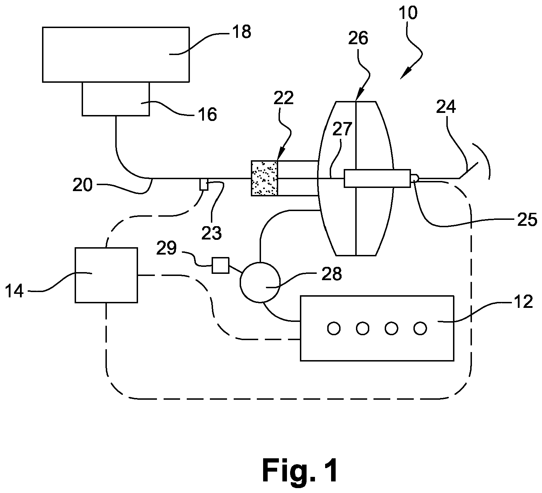

On a représenté schématiquement à la figure 1 un véhicule automobile 10 mu par un moteur 12 à combustion. Le moteur 12 à combustion est susceptible d'être arrêté et redémarré automatiquement par une unité 14 électronique de commande.

Le véhicule 10 comporte aussi des moyens de freinage du véhicule. Les moyens de freinage comportent ici plusieurs dispositifs 16 de freinage dont chacun est associé à une roue 18 du véhicule 10. Pour simplifier les dessins seuls une roue 18 et le dispositif 16 de freinage associé ont été représentés.

Le dispositif 16 de freinage est par exemple formé par un frein à disque qui comporte des patins de frein (non représentés) qui sont portés par un étrier fixe et qui sont susceptibles d'être déplacés entre une position de repos dans laquelle ils sont écartés du disque et une position de serrage d'un disque de frein (non représenté) solidaire en rotation avec la roue 18.

Le dispositif 16 de freinage est commandé entre sa position de repos et sa position de serrage par la pression "Pmc" d'un fluide de freinage qui est contenu dans un circuit 20 hydraulique. De manière connue, le fluide de freinage est ici un liquide incompressible.

La pression "Pmc" du fluide de freinage est commandée par un maître-cylindre 22. De manière simplifiée, le maître-cylindre 22 agit comme un piston qui est susceptible d'être déplacé entre une position de repos et une position de compression du fluide de freinage contenu dans le circuit 20 hydraulique.

Par mesure de sécurité, le circuit 20 hydraulique comporte un capteur 23 de pression qui est agencé de manière à mesurer à tout instant la pression "Pmc" du fluide de freinage. Cette pression sera par la suite appelée "pression de freinage Pmc". Le capteur 23 envoie un signal représentatif de la pression de freinage "Pmc" à destination de l'unité 14 électronique de commande.

Une tige 27 de poussée du piston du maître-cylindre 22 est susceptible d'être poussée par le conducteur du véhicule 10 par l'intermédiaire d'un organe 24 d'actionnement. L'organe 24 d'actionnement est ici une pédale de freinage qui est mobile entre une position de repos vers laquelle elle est rappelée élastiquement, et une position extrême d'actionnement. Lorsque l'organe 24 d'actionnement est déplacé vers sa position extrême d'actionnement, la pression "Pmc" du fluide de freinage augmente pour actionner le dispositif 16 de freinage vers sa position de freinage. La pression "Pmc" du fluide de freinage augmente de manière globalement proportionnelle à la course de déplacement de l'organe 24 d'actionnement.

Cependant, la pression "Pmc" de freinage requise pour que le dispositif 16 de freinage freine efficacement le véhicule 10 nécessite un effort très élevé sur la tige 27 de poussée du maître-cylindre 22.

Aussi, pour assister le conducteur, il est connu d'interposer un servofrein 26 à dépression entre l'organe 24 d'actionnement et le maître-cylindre 22 afin d'amplifier l'effort de l'organe 24 d'actionnement au moyen d'une dépression fournie par un réservoir 28 maintenu en dépression par des moyens 29 de dépression. Les moyens 29 de dépression tendent à diminuer la pression dans le réservoir 28 jusqu'à une pression minimale d'assistance "Pass_min".

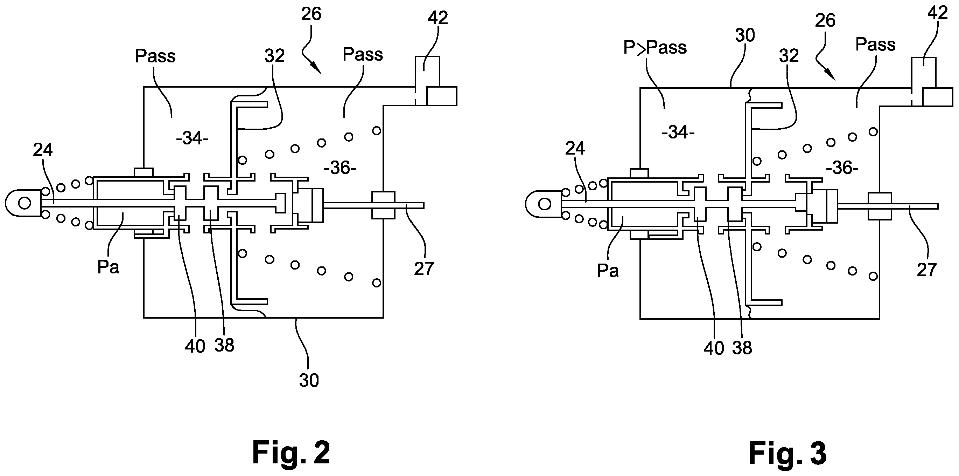

Le principe de fonctionnement du servofrein 26 à dépression est expliqué plus en détail aux figures 2 et 3.

Le servofrein 26 comporte un carter 30 rigide divisé par une cloison 32 souple en une chambre arrière 34 et une chambre avant 36. La cloison 32 est susceptible de solliciter la tige 27 de poussée du maître-cylindre 22 vers sa position de compression du fluide de freinage. La cloison 32 comporte aussi deux clapets 38, 40 qui sont commandés par l'organe 24 d'actionnement.

Les deux chambres 34, 36 sont susceptibles de communiquer ensemble par l'intermédiaire d'un premier clapet 38 qui est commandé par l'organe 24 d'actionnement.

La chambre arrière 34 est susceptible de communiquer avec la pression "Patm" atmosphérique par l'intermédiaire d'un deuxième clapet 40 qui est aussi commandé par l'organe 24 d'actionnement.

La chambre avant 36 est susceptible d'être alimentée avec une première pression "Pass", dite d'assistance, qui est inférieure à la pression "Patm" atmosphérique par l'intermédiaire d'un orifice 42 communiquant avec le réservoir 28 à dépression.

Lorsque l'organe 24 d'actionnement est dans sa position de repos, comme représenté à la figure 2, les deux chambres 34, 36 communiquent ensemble par l'intermédiaire du premier clapet 38 tandis que le deuxième clapet 40 est fermé. Les deux chambres 34, 36 sont alors soumises à la même pression "Pass" d'assistance.

Lorsque l'organe 24 de freinage est actionné, le premier clapet 38 est fermé, isolant ainsi les deux chambres 34, 36. Le deuxième clapet 40 est ouvert laissant ainsi pénétrer de l'air à pression atmosphérique "Patm" dans la chambre arrière 34. La différence de pression "Patm-Pass" entre les deux chambres 34, 36 entraîne un déplacement de la cloison 32, et donc de la tige 27 de poussée du maître-cyindre 22, vers l'avant jusqu'à fermeture du deuxième clapet 40, le premier clapet 38 demeurant fermé. La quantité d'air atmosphérique introduite dans la chambre arrière 34 est d'autant plus importante que l'organe 24 d'actionnement est enfoncé profondément. En d'autres termes, la pression de freinage "Pmc" augmente d'autant plus que le volume d'air à pression atmosphérique "Patm" introduit dans la chambre arrière 34 du servofrein 26 est important.

Lorsque le conducteur relâche l'organe 24 d'actionnement, le premier clapet 38 s'ouvre, tandis que le deuxième clapet 40 demeure fermé. Ceci entraîne un rééquilibrage de pression entre les deux chambres 34, 36, et une expulsion de l'air à pression atmosphérique vers le réservoir 28 à dépression.

Ainsi, comme expliqué précédemment, la pression d'assistance "Pass" dans le réservoir 28 à dépression augmente uniquement lorsque l'organe 24 d'actionnement revient vers sa position de repos, c'est-à-dire lorsque la pression "Pmc" de freinage diminue. La pression d'assistance "Pass" augmente depuis une pression initiale d'assistance "Pass_ini" jusqu'à une pression d'assistance "Pass_actu" actualisée. Les moyens 29 de dépression permettent ensuite un retour de la pression d'assistance "Pass" vers sa valeur minimale "Pass_min".

Par ailleurs, comme représenté à la figure 1, l'organe 24 d'actionnement est susceptible de déclencher un moyen de détection 25 lorsqu'il est déplacé depuis sa position de repos au-delà d'une position intermédiaire d'activation. Le moyen de détection 25 est par exemple formé par un contacteur ou un interrupteur.

Le déplacement de l'organe 24 d'actionnement entre la position de repos et la position intermédiaire d'activation n'entraîne pas d'ouverture du deuxième clapet 40 dans le servofrein 26. Il s'agit d'un déplacement "à vide".

Au-delà de la position de garde, le contacteur 25 est déclenché. Ce contacteur 25 déclenche entre autres l'allumage des feux de stop du véhicule 10. Au-delà de la position d'activation, le deuxième clapet 40 est ouvert de manière à entraîner un déplacement de la tige 27 de poussée du maître-cylindre 22. Ainsi, le déplacement de l'organe 24 d'actionnement est détecté lorsqu'il dépasse sa position intermédiaire d'activation.

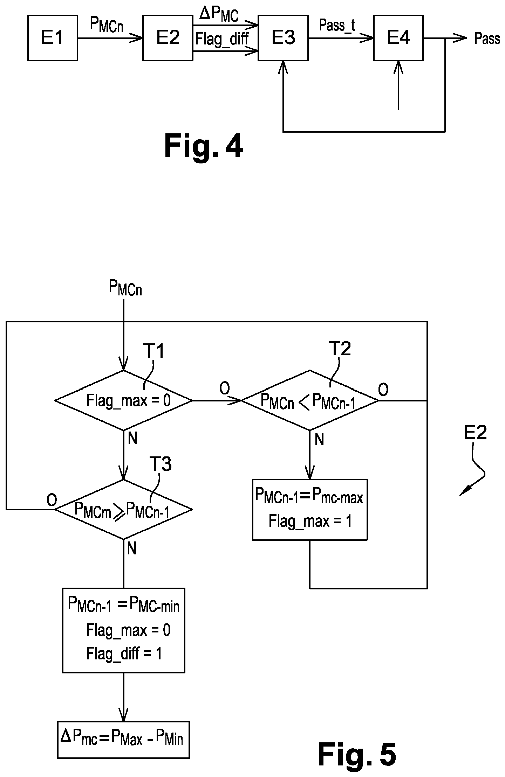

Cependant, au début de ce déplacement, la pression "Pmc" de freinage n'augmente pas de manière sensible pour le capteur 23. En effet, au repos, les patins de freins sont écartés du disque de frein avec un jeu permettant la rotation sans frottement du disque. Le début de déplacement du piston correspond au déplacement des patins jusqu'au contact du disque. Un tel déplacement ne nécessite pas une augmentation sensible de pression de freinage "Pmc".Partant de ces constats, l'invention propose un procédé d'estimation à tout moment de la pression d'assistance "Pass" dans le réservoir 28 de dépression. Ce procédé permet d'estimer la pression "Pass" présente dans le réservoir 28 à tout moment, sans recourir à l'utilisation d'un capteur physique agencé dans le réservoir 28. Ce procédé est décrit en référence aux figures 4 et 5.

Le procédé comporte une première étape "E1" de détermination de la pression de freinage "Pmc". Cette étape "E1" est répétée cycliquement par l'unité 14 électronique de commande à une fréquence élevée déterminée tant que le véhicule est en situation de circulation. La fréquence est par exemple de l'ordre de la milliseconde.

A un instant "t" déterminé, la pression "Pmcₙ" de freinage est égale une valeur minimale de repos "V0" déterminée lorsque le contacteur 25 ne détecte pas de déplacement de l'organe 24 d'actionnement. Sinon, lorsque le contacteur 25 détecte un déplacement de l'organe 24 d'actionnement, la pression "Pmcₙ" de freinage est égale à la plus grande valeur entre la mesure de la pression par le capteur "Vmes" et une pression de garde déterminée "V1".

La pression minimale de repos "V0" correspond à la pression du fluide de freinage lorsque les patins sont dans leur position de repos.

La pression de garde "V1" correspond à la pression nécessaire pour déplacer les patins jusqu'au contact du disque. Cette pression "V1" n'étant pas ou peu détectable par le capteur 23, cette pression est mémorisée directement dans l'unité 14 électronique de commande. Ainsi, au lieu d'être mesurée par le capteur 23, elle est attribuée par l'unité 14 électronique de commande lors du déclenchement du contacteur 25.

Au cycle "t+1" suivant, l'unité 24 électronique de commande calcule la nouvelle valeur de la pression de freinage "Pmcₙ₊₁".

Avantageusement, la succession chronologique des valeurs de pression de freinage "Pmc" forme un signal de pression de freinage qui peut être filtré par un filtre du premier ordre (non représenté).

Pendant une deuxième étape "E2" de calcul d'une diminution de pression de freinage, l'unité 14 électronique de commande calcule l'amplitude "ΔPmc" de la diminution de pression de freinage lors d'une baisse de cette pression.

La deuxième étape "E2" est représentée plus en détails à la figure 5. Au cours de cette étape "E2", le maximum "Pmc_max" puis le minimum "Pmc_min" atteints successivement par la pression de freinage "Pmc" sont mémorisés par l'unité 14 électronique de commande.

Pour ce faire, comme représenté à la figure 5, le test "T1" permet de vérifier qu'aucun maximum "Pmc_max" n'a déjà été trouvé. C'est le cas lorsqu'une première variable booléenne "Flag_max" est égale à zéro.

En ce cas, le test "T2" permet de vérifier que la pression de freinage "Pmcₙ" calculée à un cycle actuel "t" lors de l'étape "E1" est strictement inférieure à la pression de freinage "Pmcₙ₋₁" calculée au cycle précédent "t-1".

Si ce n'est pas le cas, la pression de freinage "Pmc" continue à augmenter ou tout au moins à stagner. Le maximum "Pmc_max" n'est donc pas considéré comme atteint. L'étape "E2" est alors réitérée.

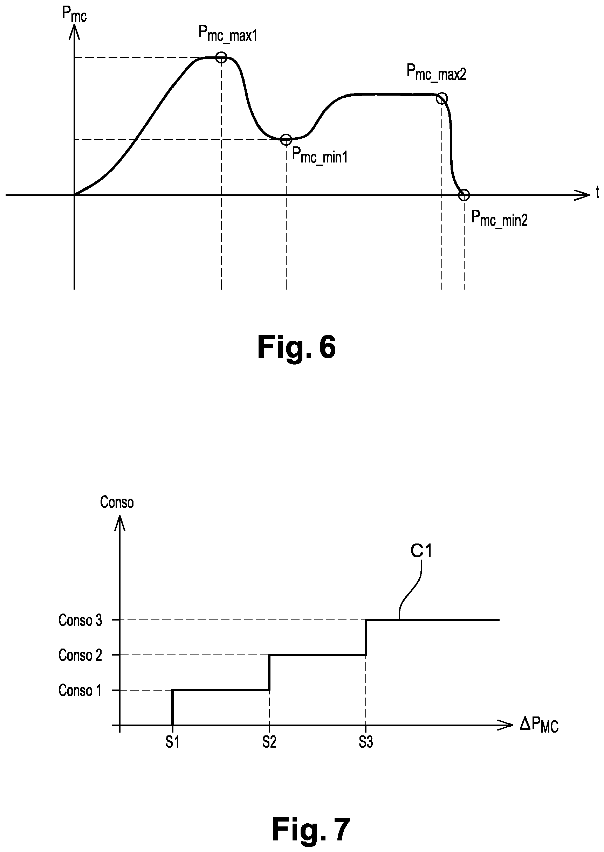

Si c'est le cas, cela signifie que la pression de freinage "Pmc" commence à baisser. La valeur de la pression de freinage précédente "Pmcₙ₋₁" est considérée comme étant le maximum "Pmc_max", et elle est mémorisée dans l'unité 14 électronique de commande. La valeur de la première variable booléenne "Flag_max" devient égale à un. Un exemple de détection de deux maxima "Pmc_max1" et "Pmc_max2" est illustré à la figure 6.

On réitère à nouveau l'étape "E2", cependant, du fait du changement de valeur de la première variable booléenne "Flag_max", on teste à présent au test "T3" que la pression de freinage "Pmc" atteigne son minimum. Pour ce faire, à chaque itération de la deuxième étape "E2", on vérifie que la pression de freinage "Pmcₙ" actualisée lors de l'étape "E1" est supérieure ou égale à la pression de freinage "Pmcₙ₋₁" calculée au cycle précédent "t-1 ".

Si ce n'est pas le cas, la pression de freinage "Pmc" continue à baisser. Le minimum "Pmc_min" n'a donc pas été atteint. L'étape "E2" est alors réitérée.

Si c'est le cas, cela signifie que la pression de freinage "Pmc" recommence à augmenter ou tout au moins à stagner. La valeur de la pression de freinage "Pmcₙ₋₁" précédente est considérée comme étant le minimum "Pmc_min". Cette dernière est mémorisée dans l'unité 14 électronique de commande. La valeur de la variable booléenne "Flag_max" redevient égale à zéro. Un exemple de détection de deux minima "Pmc_min1" et "Pmc_min2" est représenté à la figure 6.

Puis l'amplitude "ΔPmc" de la baisse de la pression de freinage est calculée par l'unité 14 électronique en effectuant la différence entre le maximum "Pmc_max" et le minimum "Pmc_min" mémorisés. Pour signaler que cette diminution est calculée, une deuxième variable booléenne "Flag_diff" devient égale à un.

Une troisième étape "E3" d'estimation de l'augmentation de la pression d'assistance "Pass" dans le réservoir 28 est déclenchée à l'issue de la deuxième étape "E2", lorsque la deuxième variable booléenne "Flag_diff" est égale à un.

Au cours de cette troisième étape "E3", l'augmentation "Conso" de la pression d'assistance "Pass" dans le réservoir 28 à dépression est estimée en fonction de l'amplitude "ΔPmc" calculée à la deuxième étape "E2".

L'augmentation "Conso" de pression d'assistance "Pass" est tout d'abord estimée en fonction de l'amplitude "ΔPmc" à partir d'une courbe "C1" de correspondance prédéterminée. La courbe "C1" de correspondance est prédéterminée, par exemple de manière expérimentale, et elle est enregistrée dans une mémoire permanente de l'unité 14 électronique de commande.

Dans l'exemple représenté à la figure 7, la courbe "C1" prédéterminée présente la forme d'un escalier de manière à faire correspondre une augmentation "Conso" déterminée de la pression d'assistance "Pass" avec un intervalle déterminé d'amplitude "ΔPmc". Ainsi, lorsque l'amplitude "ΔPmc" est inférieure à un premier seuil "S1", l'augmentation de pression d'assistance "Pass" est égale à une première valeur "Conso_1". Lorsque l'amplitude "ΔPmc" est comprise entre le premier seuil "S1" et un deuxième seuil "S2" supérieur, l'augmentation de la pression d'assistance "Pass" est égale à une deuxième valeur "Conso_2" supérieure à la première, et ainsi de suite.

Pour finir cette troisième étape "E3", la pression d'assistance "Pass_actu" actualisée est calculée en additionnant la pression d'assistance initiale "Pass_ini" avec l'augmentation "Conso" calculée à la deuxième étape "E2".

A l'issue de cette troisième étape "E3", la deuxième variable booléenne "Flag_diff", la valeur de l'amplitude "ΔPmc" et les pressions de freinage maximale "Pmc_max" et minimale "Pmc_min" redeviennent égales à zéro. La deuxième étape "E2" du procédé est alors réitérée.

A l'issue de la troisième étape "E3", une quatrième étape "E4" de calcul de retour vers la pression minimale "Pass_min" d'assistance dans le réservoir 28 est déclenchée. Cette quatrième étape "E4" est mise en oeuvre pendant que les première "E1" et deuxième "E2" étapes du procédé sont réitérées.

Au cours de cette quatrième étape "E4", l'unité 14 électronique de commande calcule la baisse de la pression générée dans le réservoir 28 par les moyens 29 de dépression en fonction du temps.

La diminution de pression d'assistance "Pass" est ici simulée par une fonction exponentielle décroissante présentant une constante de temps déterminée. Du point de vue de l'automatique, on considère ainsi que le réservoir 28 et les moyens 29 de dépression forment un système du premier ordre recevant en entrée un signal échelon de valeur "Pass_min". La réponse du système ainsi défini est de la forme suivante : Pass_ini = Pass_actu*(Pass_min-Pass_actu)*e^{-t/τ} dans laquelle "τ" est la constante de temps.

Cette quatrième étape "E4" dure jusqu'à ce qu'une nouvelle amplitude "ΔPmc" de diminution de pression de freinage ait été calculée à la deuxième étape "E2", c'est à dire jusqu'à ce que la deuxième variable booléenne "Flag_diff" devienne égale à un, ou jusqu'à ce que la pression d'assistance atteigne sa valeur "Pass_min" minimale. La valeur obtenue à l'issue de la quatrième étape "E4" forme la pression initiale d'assistance "Pass_ini" qui est utilisée à l'itération suivante de la troisième étape "E3" pour calculer la pression d'assistance actualisée "Pass_actu".

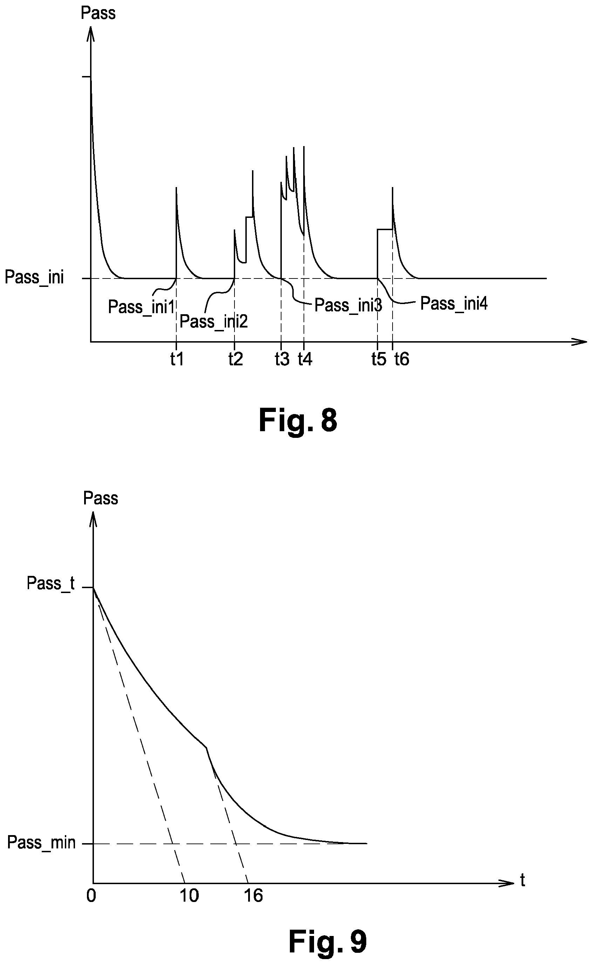

Selon un premier mode de réalisation de l'invention, les moyens 29 de dépression sont formés par une pompe mécanique qui est entraînée par le moteur 12 thermique. Cette configuration est généralement utilisée lorsque le moteur 12 thermique est un moteur Diesel. La pompe formant les moyens 29 de dépression tourne alors à une vitesse fixe, produisant ainsi une dépression constante. La constante de temps "τ" est alors fixée et invariable, par exemple la constante de temps "τ" est fixée à 6 secondes. On a représenté à la figure 8 l'évolution de la pression dans le réservoir 28.

Ainsi, à chaque fois qu'une augmentation de la pression d'assistance actualisée "Pass_actu" est calculée à l'issue de la troisième étape "E3", la diminution de pression d'assistance "Pass" provoquée par les moyens 29 de dépression est calculée à l'aide de l'équation exposée précédemment. Comme illustré à la figure 8, lorsque suffisamment de temps d'écoule entre deux freinages, la pression d'assistance revient jusqu'à sa valeur minimale "Pass_min", comme cela est représenté par les minima "Pass_ini1" et "Pass_ini4". En revanche, lorsque deux freinages s'enchaînent rapidement, la pression d'assistance ne peut pas revenir jusqu'à sa valeur minimale, comme cela est indiqué par les minima "Pass_ini2" et "Pass_ini3".

Selon un deuxième mode de réalisation l'invention, les moyens 29 de dépression sont formés par une dépression dans une conduite d'admission d'air du moteur 12 thermique. Cette configuration est typique d'un moteur 12 thermique à essence. En ce cas, la constante de temps "τ" est variable en fonction de paramètres de fonctionnement du moteur 12 tel que son régime.

Un exemple d'une telle évolution est représenté à la figure 9 dans laquelle la constante de temps "τ" est tout d'abord de 10 secondes, correspondant à un bas régime du moteur. Puis, au bout de 10 secondes, la constante de temps "τ" prend la valeur de 3 secondes, correspondant à une augmentation du régime moteur.

Selon un troisième mode de réalisation de l'invention, les moyens 29 de dépression sont formés par une pompe électrique. L'activation de la pompe électrique est ainsi susceptible d'être commandée indépendamment du fonctionnement du moteur 12 thermique. Une telle configuration est aussi applicable à un véhicule à moteur de traction électrique. Dans ce cas, la constante de temps "τ" est variable en fonction de l'intensité du courant électrique de commande.

Le procédé réalisé selon les enseignements de l'invention permet ainsi d'estimer à tout moment et de manière précise la pression d'assistance du réservoir à dépression lorsque le véhicule est en situation de circulation. L'estimation est réalisée de manière économique en utilisant le capteur de mesure de la pression du fluide de freinage déjà utilisé pour piloter le freinage du véhicule, et en utilisant un moyen de détection du déplacement de l'organe d'actionnement qui est déjà utilisé pour allumer les feux de stop du véhicule.

Le procédé d'estimation mis en oeuvre par l'unité électronique de commande permet une estimation rapide et précise, à tout moment, de la pression d'assistance dans le réservoir à dépression.

## Revendications

1. Procédé d'estimation de la pression (Pass) dans un réservoir (28) à dépression d'un servofrein (26) à dépression de véhicule (10) automobile, le véhicule (10) comportant :
- au moins un dispositif (16) de freinage commandé par la pression (Pmc) d'un fluide de freinage ;
- un maître-cylindre (22) qui commande la pression (Pmc) du fluide de freinage et qui est actionné par un organe (24) d'actionnement mobile entre une position de repos et une position extrême d'actionnement ;
- un servofrein (26) qui est interposé entre l'organe (24) d'actionnement et le maître-cylindre (22) pour amplifier l'effort de l'organe (24) d'actionnement au moyen d'une dépression fournie par un réservoir (28) maintenu en dépression, par des moyens de dépression, à une pression (Pass) d'assistance ;
- un moyen (25) de détection du déplacement de l'organe (24) d'actionnement au-delà d'une position intermédiaire de garde ;
- un capteur (23) de pression qui est agencé de manière à mesurer la pression (Pmc) de freinage du fluide de freinage ;
le procédé comportant :
- une première étape (E1) de détermination de la pression (Pmc) de freinage qui est répétée cycliquement ;
- une deuxième étape (E2) de calcul de l'amplitude (ΔPmc) d'une diminution de pression au cours de laquelle le maximum (Pmc_max) puis le minimum (Pmc_min) atteints successivement par la pression de freinage sont mémorisés, et au cours de laquelle l'amplitude (ΔPmc) de la diminution de pression de freinage est calculée en effectuant la différence entre le maximum (Pmc_max) et le minimum (Pmc_min) ;
- une troisième étape (E3) qui est déclenchée à l'issue de la deuxième étape (E2) et au cours de laquelle l'augmentation (Conso) de la pression (Pass) dans le réservoir (28) à dépression est estimée en fonction de l'amplitude (ΔPmc) calculée à la deuxième étape (E2), une pression (Pass_actu) d'assistance actualisée étant calculée en additionnant ladite augmentation (Conso) avec une pression (Pass_ini) initiale d'assistance, **caractérisé en ce qu'**il comporte une quatrième étape (E4) de calcul du retour vers une pression (Pass_min) minimale d'assistance dans le réservoir (28), qui est déclenchée à l'issue de la troisième étape (E3) et au cours de laquelle la diminution de pression créée dans le réservoir (28) par les moyens (29) de dépression est calculée.

2. Procédé selon la revendication précédente, **caractérisé en ce que** la quatrième étape (E4) dure jusqu'à ce qu'une nouvelle amplitude (ΔPmc) de diminution de pression de freinage ait été calculée à la deuxième étape (E2), ou jusqu'à ce que la pression (Pass_min) minimale d'assistance soit atteinte, la pression d'assistance obtenue à l'issue de cette quatrième étape (E4) étant utilisée lors de l'itération suivante de la troisième étape (E3) comme pression (Pass_ini) initiale d'assistance.

3. Procédé selon l'une quelconque des revendications précédentes, **caractérisé en ce que** le retour vers la pression minimale d'assistance (Pass_min) est simulé par une fonction exponentielle décroissante présentant une constante de temps (τ) déterminée.

4. Procédé selon la revendication précédente, **caractérisé en ce que** les moyens (29) de dépression sont formés par une pompe mécanique qui est entraînée par un moteur (12) thermique, la constante de temps (τ) étant fixée et invariable.

5. Procédé selon la revendication 3, **caractérisé en ce que** les moyens (29) de dépression sont formés par une dépression dans une conduite d'admission d'air d'un moteur (12) thermique, la constante de temps (τ) étant variable en fonction de paramètres de fonctionnement du moteur (12), notamment son régime.

6. Procédé selon la revendication 3, **caractérisé en ce que** les moyens (29) de dépression sont formés par une pompe électrique, la constante de temps (τ) étant variable en fonction de l'intensité du courant de commande de la pompe électrique.

7. Procédé selon l'une quelconque des revendications précédentes, **caractérisé en ce qu'**au cours de la première étape (E1), la pression (Pmc) de freinage calculée est égale à :
- une valeur (V0) de repos tant qu'aucun déplacement de l'organe (24) d'actionnement n'est détecté ; ou à,
- la plus grande valeur entre la mesure (Vm) de la pression (Pmc) par le capteur (23) et une pression (V1) minimale déterminée lorsqu'un déplacement de l'organe (24) d'actionnement est détecté

8. Procédé selon l'une quelconque des revendications précédentes, **caractérisé en ce qu'**au cours de la troisième étape (E3), l'augmentation (Conso) de pression dans le réservoir (28) est estimée en fonction de l'amplitude (ΔPmc) de la diminution de pression à partir d'une courbe (C1) de correspondance prédéterminée.

9. Procédé selon la revendication précédente, **caractérisé en ce que** la courbe (C1) prédéterminée présente la forme d'un escalier de manière à faire correspondre une augmentation (Conso) déterminée de la pression (Pass) avec un intervalle déterminé de valeurs d'amplitude (ΔPmc) de diminution de pression de freinage.

10. Procédé selon l'une quelconque des revendications précédentes, **caractérisé en ce que**, lors de la deuxième étape (E2), une première valeur de pression (Pmcₙ₋₁) est considérée comme un maximum de pression (Pmc_max) lorsqu'une deuxième valeur de pression (Pmcₙ) calculée au cycle suivant de la première étape (E1) est strictement inférieure à la première valeur (Pmcₙ₋₁).

11. Procédé selon l'une quelconque des revendications précédentes, **caractérisé en ce que**, lors de la deuxième étape (E2), une première valeur de pression (Pmcₙ₋₁) est considérée comme un minimum (Pmc_min) lorsque :
- un maximum (Pmc_max) a été atteint précédemment ;
- et une deuxième valeur de pression (Pmcₙ) calculée au cycle suivant de la première étape (E1) est supérieure ou égale à la première valeur de pression (Pmcₙ₋₁).

12. Procédé selon l'une quelconque des revendications précédentes, **caractérisé en ce que** la deuxième étape (E2) est réitérée lorsqu'un minimum (Pmc_min) a été atteint.

## Patentansprüche

1. Verfahren zur Schätzung des Drucks (Pass) in einer Unterdruckkammer (28) einer Unterdruckservobremse (26) eines Kraftfahrzeugs (10), wobei das Fahrzeug (10) umfasst:
- mindestens eine durch den Druck (Pmc) einer Bremsflüssigkeit gesteuerte Bremsvorrichtung (16) ;
- einen Hauptzylinder (22), der den Druck (Pmc) der Bremsflüssigkeit steuert und von einem Betätigungselement (24), das zwischen einer Ruheposition und einer äußersten Betätigungsposition beweglich ist, betätigt wird;
- eine Servobremse (26), die zwischen dem Betätigungselement (24) und dem Hauptzylinder (22) zwischengefügt ist, um die Kraft des Betätigungselements (24) mit Hilfe eines Unterdrucks zu verstärken, der von einer Kammer (28) geliefert wird, die durch Unterdruckmittel auf Unterdruck mit einem Hilfsdruck (Pass) gehalten wird;
- ein Mittel (25) zur Erfassung der Verschiebung des Betätigungselements (24) über eine Zwischenwarteposition hinaus;
- einen Drucksensor (23), der dazu vorgesehen ist, den Bremsdruck (Pmc) der Bremsflüssigkeit zu messen;
wobei das Verfahren umfasst:
- einen ersten Schritt (E1) der Bestimmung des Bremsdrucks (Pmc), der zyklisch wiederholt wird;
- einen zweiten Schritt (E2) der Berechnung der Amplitude (ΔPmc) einer Druckminderung, während dessen das Maximum (Pmc_max), dann das Minimum (Pmc_min), die nacheinander vom Bremsdruck erreicht werden, gespeichert werden, und während dessen die Amplitude (ΔPmc) der Bremsdruckminderung berechnet wird, wobei die Differenz zwischen dem Maximum (Pmc_max) und dem Minimum (Pmc_min) festgestellt wird;
- einen dritten Schritt (E3), der nach dem zweiten Schritt (E2) ausgelöst wird, und während dessen die Erhöhung (Conso) des Drucks (Pass) in der Unterdruckkammer (28) in Abhängigkeit von der in dem zweiten Schritt (E2) berechneten Amplitude (ΔPmc) geschätzt wird, wobei ein aktualisierter Hilfsdruck (Pass_actu) berechnet wird, wobei die Erhöhung (Conso) mit einem Anfangshilfsdruck (Pass_ini) addiert wird,
**dadurch gekennzeichnet, dass** es einen vierten Schritt (E4) der Berechnung der Rückkehr zu einem Mindesthilfsdruck (Pass_min) in der Kammer (28) umfasst, der nach dem dritten Schritt (E3) ausgelöst wird, und während dessen die in der Kammer (28) durch die Unterdruckmittel (29) erzeugte Druckminderung berechnet wird.

2. Verfahren nach dem vorhergehenden Anspruch, **dadurch gekennzeichnet, dass** der vierte Schritt (E4) dauert, bis eine neue Bremsdruckminderungsamplitude (ΔPmc) in dem zweiten Schritt (E2) berechnet wurde, oder bis der Mindesthilfsdruck (Pass_min) erreicht ist, wobei der nach diesem vierten Schritt (E4) erhaltene Hilfsdruck bei der folgenden Iteration des dritten Schritts (E3) als Anfangshilfsdruck (Pass_ini) verwendet wird.

3. Verfahren nach einem der vorhergehenden Ansprüche, **dadurch gekennzeichnet, dass** die Rückkehr zum Mindesthilfsdruck (Pass_min) durch eine fallende exponentielle Funktion, die eine bestimmte Zeitkonstante (τ) aufweist, simuliert wird.

4. Verfahren nach dem vorhergehenden Anspruch, **dadurch gekennzeichnet, dass** die Unterdruckmittel (29) von einer mechanischen Pumpe gebildet sind, die von einem Verbrennungsmotor (12) angetrieben wird, wobei die Zeitkonstante (τ) festgelegt und unveränderlich ist.

5. Verfahren nach Anspruch 3, **dadurch gekennzeichnet, dass** die Unterdruckmittel (29) von einem Unterdruck in einer Lufteinlassleitung eines Verbrennungsmotors (12) gebildet sind, wobei die Zeitkonstante (τ) in Abhängigkeit von Betriebsparametern des Motors (12), insbesondere seiner Drehzahl, variabel ist.

6. Verfahren nach Anspruch 3, **dadurch gekennzeichnet, dass** die Unterdruckmittel (29) von einer elektrischen Pumpe gebildet sind, wobei die Zeitkonstant (τ) in Abhängigkeit von der Stärke des Steuerstroms der elektrischen Pumpe variabel ist.

7. Verfahren nach einem der vorhergehenden Ansprüche, **dadurch gekennzeichnet, dass** während des ersten Schrittes (E1) der berechnete Bremsdruck (Pmc) gleich ist:
- einem Ruhewert (V0), solange keine Verschiebung des Betätigungselements (24) erfasst ist; oder
- dem größten Wert zwischen der Messung (Vm) des Drucks (Pmc) durch den Sensor (23) und einem bestimmten Mindestdruck (V1), wenn eine Verschiebung des Betätigungselements (24) erfasst wird.

8. Verfahren nach einem der vorhergehenden Ansprüche, **dadurch gekennzeichnet, dass** während des dritten Schrittes (E3) die Erhöhung (Conso) des Drucks in der Kammer (28) in Abhängigkeit von der Druckminderungsamplitude (ΔPmc) auf Basis einer vorbestimmten Übereinstimmungskurve (C1) geschätzt wird.

9. Verfahren nach dem vorhergehenden Anspruch, **dadurch gekennzeichnet, dass** die vorbestimmte Kurve (C1) die Form einer Treppe aufweist, um eine bestimmte Erhöhung (Conso) des Drucks (Pass) mit einem bestimmten Werteintervall einer Bremsdruckminderungsamplitude (ΔPmc) in Übereinstimmung zu bringen.

10. Verfahren nach einem der vorhergehenden Ansprüche, **dadurch gekennzeichnet, dass** in dem zweiten Schritt (E2) ein erster Druckwert (PmCₙ₋₁) als ein Druckmaximum (Pmc_max) betrachtet wird, wenn ein zweiter, im folgenden Zyklus des ersten Schrittes (E1) berechneter Druckwert (Pmcₙ) in jedem Fall kleiner als der erste Wert (PmCₙ₋₁) ist.

11. Verfahren nach einem der vorhergehenden Ansprüche, **dadurch gekennzeichnet, dass** in dem zweiten Schritt (E2) ein erster Druckwert (PmCₙ₋₁) als ein Minimum (Pmc_min) betrachtet wird, wenn:
- ein Maximum (Pmc_max) vorher erreicht wurde;
- und ein zweiter, im folgenden Zyklus des ersten Schrittes (E1) berechneter Druckwert (Pmcₙ) größer oder gleich dem ersten Druckwert (Pmcₙ₋₁) ist.

12. Verfahren nach einem der vorhergehenden Ansprüche, **dadurch gekennzeichnet, dass** der zweite Schritt (E2) reiteriert wird, wenn ein Minimum (Pmc_min) erreicht wurde.

## Claims

1. Method for estimating the pressure (Pass) in a vacuum chamber (28) of a vacuum brake servo (26) of a motor vehicle (10), the vehicle (10) comprising:
- at least one braking device (16) controlled by the pressure (Pmc) of a brake fluid;
- a master cylinder (22), which controls the pressure (Pmc) of the brake fluid and which is actuated by an actuating member (24) movable between a rest position and an end actuation position;
- a brake servo (26), which is arranged between the actuating member (24) and the master cylinder (22) to amplify the force of the actuating member (24) by means of a vacuum, provided by a chamber (28) held under vacuum, by vacuum means, to an assistance pressure (Pass);
- a means (25) for detecting the displacement of the actuating member (24) beyond an intermediate guard position;
- a pressure sensor (23), which is designed to measure the braking pressure (Pmc) of the brake fluid; the method comprising:
- a first step (E1) of calculating the braking pressure (PMC), which is repeated cyclically;
- a second step (E2) of determining the amplitude (ΔPmc) of a reduction in pressure, during which the maximum (Pmc_max) then the minimum (Pmc_min) reached successively by the braking pressure are stored, and during which the amplitude (ΔPmc) of the reduction in braking pressure is calculated by establishing the difference between the maximum (Pmc_max) and the minimum (Pmc_min);
- a third step (E3), which is triggered at the end of the second step (E2) and during which the increase (Conso) of the pressure (Pass) in the vacuum chamber (28) is estimated as a function of the amplitude (ΔPmc) calculated in the second step (E2), an updated assistance pressure (Pass_actu) being calculated by adding said increase (Conso) to an initial assistance pressure (Pass_ini),
**characterized in that** it comprises a fourth step (E4) of calculation of the return to a minimum assistance pressure (Pass_min) in the chamber (28), which is triggered at the end of the third step (E3) and during which the reduction in pressure created in the chamber (28) by the vacuum means (29) is calculated.

2. Method according to the preceding claim, **characterized in that** the fourth step (E4) lasts until a new braking pressure reduction amplitude (ΔPmc) has been calculated in the second step (E2), or until the minimum assistance pressure (Pass_min) is reached, the assistance pressure obtained at the end of this fourth step (E4) being used in the next iteration of the third step (E3) as initial assistance pressure (Pass_ini).

3. Method according to either one of the preceding claims, **characterized in that** the return to the minimum assistance pressure (Pass_min) is simulated by a decrease in exponential function exhibiting a determined time constant (T).

4. Method according to the preceding claim, **characterized in that** the vacuum means (29) are formed by a mechanical pump which is driven by a heat engine (12), the time constant (T) being fixed and invariable.

5. Method according to Claim 3, **characterized in that** that the vacuum means (29) are formed by a vacuum in an air intake duct of the heat engine (12), the time constant (T) being variable as a function of operating parameters of the engine (12), notably in speed.

6. Method according to Claim 3, **characterized in that** the vacuum means (29) are formed by an electric pump, the time constant (T) being variable as a function of the intensity of the control current of the electric pump.

7. Method according to any one of the preceding claims, **characterized in that**, during the first step (E1), the braking pressure (Pmc) calculated is equal to:
- a rest value (V0) as long as no displacement of the actuating member (24) is detected; or to
- the greater value between the measurement (Vm) of the pressure (Pmc) by the sensor (23) and a minimum pressure (V1) determined when a displacement of the actuating member (24) is detected.

8. Method according to any one of the preceding claims, **characterized in that**, during the third step (E3), the increase (Conso) of pressure in the chamber (28) is estimated as a function of the amplitude (ΔPmc) of the reduction in pressure on the basis of a predetermined correspondence curve (C1).

9. Method according to the preceding claim, **characterized in that** the predetermined curve (C1) has a stepped form so as to match a determined increase (Conso) in pressure (Pass) to a determined range of values of the amplitude (ΔPmc) of reduction in braking pressure.

10. Method according to any one of the preceding claims, **characterized in that**, during the second step (E2), a first pressure value (Pmcₙ₋₁) is considered as a pressure maximum (Pmc_max) when a second pressure value (Pmcₙ) calculated in the cycle following the first step (E1) is strictly lower than the first value (Pmcₙ₋₁).

11. Method according to any one of the preceding claims, **characterized in that**, during the second step (E2), a first pressure value (Pmcₙ₋₁) is considered as a minimum (Pmc_min) when:
- a maximum (Pmc_max) was reached beforehand;
- and a second pressure value (Pmcₙ) calculated in the cycle following the first step (E1) is greater than or equal to the first pressure value (Pmcₙ₋₁).

12. Method according to any one of the preceding claims, **characterized in that** the second step (E2) is repeated when a minimum (Pmc_min) has been reached.
